# EUROPEAN PATENT APPLICATION

(11) **EP 2 204 289 A2**
(43) Date of publication of application: **07.07.2010**
(21) Application number: 10150093.2
(22) Date of filing: 05.01.2010
(51) Int. Cl.: B42D 15/02

(54) **Personalized gift artifact**

(30) Priority: 06.01.2009 US 142706 P
(71) Applicant: Fun Industries B.V., 3542 AN Utrecht (NL)
(72) Inventor: Driessen, Franciscus August Aaron, 1072MN, Amsterdam (NL)
(74) Representative: Brants, Johan P.E.

(57) **Abstract**

The present invention concerns a device and method for preparing an artifact personalized by a subject, wherein a personalized acoustic message is obtained from the subject, the message is transferred to an autonomous sound reproduction unit configured to store the message and reproduce the message upon activation, the autonomous sound reproduction unit is disposed on said artifact, thereby obtaining an artifact personalized by the subject.

## Description

### FIELD OF THE INVENTION

The present invention relates to the field of personalized artifacts, particularly greeting cards, and a method of production that allows a subject to personalize the artifact with an acoustic message.

### BACKGROUND OF THE INVENTION

Gift artifacts, such as greeting cards, can provide the recipient with an audio message that is typically reproduced upon a mechanical activation, such as opening the card or pressing an activation button. A problem associated with such artifacts is that the type of message conveyed is limited to a novelty factor, which will not always be appropriate to the sentiments of the sender. Such artifacts would not be deemed appropriate in situations other than celebrations and where humor is appropriate, thereby greatly limiting their appeal.

There is a need in the art for an artifact that provides not only the impact of audio stimulation, but would also appropriate in situations where the intended message is not limited to humorous sentiments. The present invention aims to overcome the problems associated with the art.

### SUMMARY OF THE INVENTION

The present invention concerns a method for the production of an artifact personalized by the subject comprising the steps of transferring a personalized acoustic message from the subject to an autonomous sound reproduction unit, and providing the artifact personalized and disposed with the autonomous sound reproduction unit.

The acoustic message may be obtained using an electronic means of communication, for instance by email or across the Internet, the latter utilizing a web page made available to the subject for that purpose. The personalized artifact so produced may be delivered to a defined destination using a delivery service.

Alternatively, the acoustic message may be obtained using a kiosk, disposed with a microphone to allow the subject to record the message, and / or disposed with a reader of electronic storage media (*e.g.* SD card, USB stick) to allow the subject to provide the acoustic message as a sound file, and the kiosk dispenses the personalized artifact within a short waiting period. The kiosk is preferably sited in a publicly accessible location, such as at a railway station, in a supermarket, at an airport or in a shop.

Besides being personalized with an acoustic message, the artifact may further be disposed with an image obtained from the subject.

The invention may contain additional components that enable the display of light-effects. The light effect may be correlated to and timed with regard to the reproduced sound.

One embodiment of the invention is a method for preparing an artifact personalized by a subject, comprising the steps of:
- obtaining a personalized acoustic message from the subject,
- transferring the acoustic message to an autonomous sound reproduction unit configured to store the message and reproduce the message upon activation, and
- providing said artifact disposed with the autonomous sound reproduction unit, thereby obtaining an artifact personalized by the subject.

Another embodiment of the invention is a method as described above, further comprising the step of obtaining a personalized image from the subject, and wherein the personalized artifact is further disposed with said image.

Another embodiment of the invention is a method as described above, wherein the artifact is a greeting card.

Another embodiment of the invention is a method as described above, wherein the sound reproduction unit comprises
- solid state memory for storage of the acoustic message,
- an acoustic transducer,
- a power source,
- an activator,
- a processing unit for conversion of the stored acoustic message into electrical signals for the acoustic transducer.

Another embodiment of the invention is a method as described above, wherein the sound reproduction unit comprises:
- solid-state memory for storage of the acoustic message, preferably a one-time programmable solid state memory,
- an acoustic transducer,
- a power source,
- an activator, and
- a processing unit for conversion of the stored acoustic message into electrical signals for the acoustic transducer.

Another embodiment of the invention is a method as described above, wherein the acoustic message is processed before transferring to the sound reproduction unit.

Another embodiment of the invention is a method as described above, wherein the acoustic message is processed and converted to a binary file before being transferred to the sound reproduction unit.

Another embodiment of the invention is a method as described above, wherein the processing and conversion are performed semi-automatically or automatically.

Another embodiment of the invention is a method as described above, wherein the acoustic message is obtained remotely.

Another embodiment of the invention is a method as described above, wherein the image is obtained remotely.

Another embodiment of the invention is a method as described above, wherein the acoustic message or image are obtained via email.

Another embodiment of the invention is a method as described above, wherein the acoustic message and/or image is obtained remotely, preferably by email, by telephone or by using a web page.

Another embodiment of the invention is a method as described above, further comprising the step of making available an Internet page to the subject, configured to receive the acoustic message from the subject over the Internet.

Another embodiment of the invention is a method as described above, further comprising the step of making available an internet page to the subject, configured to receive the image from the subject over the Internet.

Another embodiment of the invention is a method as described above, wherein the web page is further configured to receive a delivery address from the subject for delivery of the personalized artifact.

Another embodiment of the invention is a method as described above, wherein the web page is further configured to receive payment.

Another embodiment of the invention is a method as described above, wherein the acoustic message is provided by the subject, or selected by the subject from a choice of acoustic messages previously prepared.

Another embodiment of the invention is a method as described above, wherein the acoustic message is obtained in a kiosk disposed with a means to obtain the acoustic message, and the personalized artifact is dispensed from the kiosk.

Another embodiment of the invention is a method as described above, further comprising the step of obtaining a personalized image from the subject, and wherein the personalized artifact is further disposed with said image, wherein the kiosk is disposed with a means to obtain said image.

Another embodiment of the invention is a kiosk for preparing an artifact personalized with an acoustic message from a subject, which kiosk comprises:
- a means to obtain a personalized acoustic message from the subject,
- a solid state memory-writing device, configured to write the message to an autonomous sound reproduction unit configured to store the message, and reproduce the message upon activation,
- a media dispensing unit, configured to dispense the artifact to the subject, on which the autonomous sound reproduction unit is disposed, personalized with an acoustic message from a subject.

Another embodiment of the invention is a kiosk as described above, wherein the means to obtain a personalized acoustic message from a subject is a microphone, a solid-state memory reader, an optical storage device reader, or an infrared transducer or a Bluetooth communicator.

Another embodiment of the invention is a kiosk as described above, wherein the kiosk further comprises a means to receive a personalized image from the subject, and a media image printer, wherein the media dispensing unit is further configured to dispense the artifact on which the personalized image disposed.

Another embodiment of the invention is a kiosk as described above, wherein the means to obtain a personalized image from a subject is a digital camera, a solid-state memory reader, an optical storage device reader, or an infrared transducer or a Bluetooth communicator.

Another embodiment of the invention is an artifact disposed with an autonomous sound reproduction unit configured to reproduce a personalized acoustic message upon activation.

Another embodiment of the invention is an artifact obtained or obtainable by a method as described above.

Another embodiment of the invention is a method of preparing an autonomous sound reproduction unit for use in personalizing an artifact by a subject, comprising the steps of:
- obtaining a personalized acoustic message from the subject,
- transferring the acoustic message to the autonomous sound reproduction unit, configured to store the message and reproduce it upon activation, and
thereby obtaining the autonomous sound reproduction unit suitable personalizing an artifact.

Another embodiment of the invention is a method as described above, containing the limitations of some or all the embodiments above.

Another embodiment of the invention is a fulfillment centre for making one or more personalised artifacts defined above or obtainable by a method as defined above, according to a customer order, comprising:
- a fulfillment centre server for receiving the customer order, operatively linked to a
- a solid state memory writing device for writing to a solid state memory disposed in the autonomous sound reproduction unit, and a
- a tag reader, for reading a unique identifying tag disposed on artifact,
the centre configured to
- write an acoustic binary file corresponding to the personalized acoustic message to the solid state memory, and
- identify the acoustic message of the artifact using the tag reader.

Another embodiment of the invention is the fulfillment centre described above, configured to produce the one or more sound-personalized artifacts, and data indicating the unique identifying tag that corresponds to the acoustic message of each personalized artifact.

### FIGURE LEGENDS

**FIG. 1** Circuit diagram of an autonomous sound reproduction unit of the invention, and a connecting memory-writing station.
**FIG. 2** Graphic depiction of the workflow for a method for producing an artifact (greeting card) personalized by a subject according to the invention.
**FIG. 3** Graphic depiction of a fulfillment centre and a method for manufacture of one or more personalized artifacts using the fulfillment centre.
**FIG. 4** Graphic depiction of a fulfillment centre and a method for the manufacture of one or more personalized autonomous sound reproduction units using the fulfillment centre.
**FIG. 5** Graphic depiction of writing station, for programming the solid state memory of an autonomous sound reproduction unit when the solid state memory is programmed "in-circuit".
**FIG. 6** A photograph of a manually actuated memory writing station.
**FIG. 7** A photograph of an autonomous sound reproduction unit of the invention.
**FIG. 8** Circuit board of an autonomous sound reproduction unit of the invention.

### DETAILED DESCRIPTION OF THE INVENTION

Unless defined otherwise, all technical and scientific terms used herein have the same meaning as is commonly understood by one of skill in the art. All publications referenced herein are incorporated by reference thereto. All United States patents and patent applications referenced herein are incorporated by reference herein in their entirety including the drawings.

The articles "a" and "an" are used herein to refer to one or to more than one, *i.e.* to at least one of the grammatical object of the article. By way of example, "an integrated circuit" means one integrated circuit or more than one integrated circuit.

The recitation of numerical ranges by endpoints includes all integer numbers and, where appropriate, fractions subsumed within that range (*e.g.* 1 to 5 can include 1, 2, 3, 4 when referring to, for example, a number of integrated circuits, and can also include 1.5, 2, 2.75 and 3.80, when referring to, for example, measurements). The recitation of end points also includes the end point values themselves (*e.g.* from 1.0 to 5.0 includes both 1.0 and 5.0).

The present invention concerns a method for preparing an artifact personalized by a subject, comprising the steps of:
- obtaining a personalized acoustic message from the subject,
- transferring the acoustic message to an autonomous sound reproduction unit, configured to store the message and reproduce it upon activation, and
- providing said artifact disposed with the autonomous sound reproduction unit, thereby obtaining an artifact personalized by the subject.

The present invention also relates to a method of preparing an autonomous sound reproduction unit for use in personalizing an artifact by a subject, comprising the steps of:
- obtaining a personalized acoustic message from the subject,
- transferring the acoustic message to the autonomous sound reproduction unit, configured to store the message and reproduce it upon activation, and
thereby obtaining the autonomous sound reproduction unit suitable personalizing an artifact.

The artifact of the invention may be any object suitable for personalization with an acoustic message. Typically, though not necessarily, it is a gift artifact that can be presented to a recipient to mark an occasion or event such as a birthday, Christmas, Easter, anniversary, life event, to provide encouragement, express empathy etc. Examples of gift artifacts include a greeting card, picture frame, trophy, soft toy, plastic toy, beverage holder, pen, pencil, calendar, dispenser, book, booklet, etc, or other gift items.

In one preferred embodiment of the invention, the artifact is a communication medium *i.e.* any medium on or in which an image is disposed, or is capable of being disposed. The image may be any, for example, a photograph, a graphic, artwork, a cartoon, a logo, any information that can be read *e.g.* text, numbers, or any image which can be reproduced on the artifact, particularly, but not necessarily, when the artifact is a paper-based medium. The communication medium includes a picture frame, greeting card, a product or promotional leaflet, a business card, book-like product, booklet, bookmark, calendar, or poster etc. According to one aspect of the invention, the communication medium may be substantially paper based, formed from a carrier constructed primarily from one or more sheets of thick paper, cardboard or similar material.

In a preferred aspect of the invention, the artifact is a paper based medium, comprising one or more (*e.g.* 1, 2, 3, 4) pages bearing visual information (*e.g.* images), and disposed with the autonomous sound reproduction unit, and optionally one or more light-emitting transducers.

According to one aspect of the invention, the method comprises the step of obtaining a personalized image from the subject, and wherein the artifact is further disposed with said image.

### Autonomous sound reproduction unit

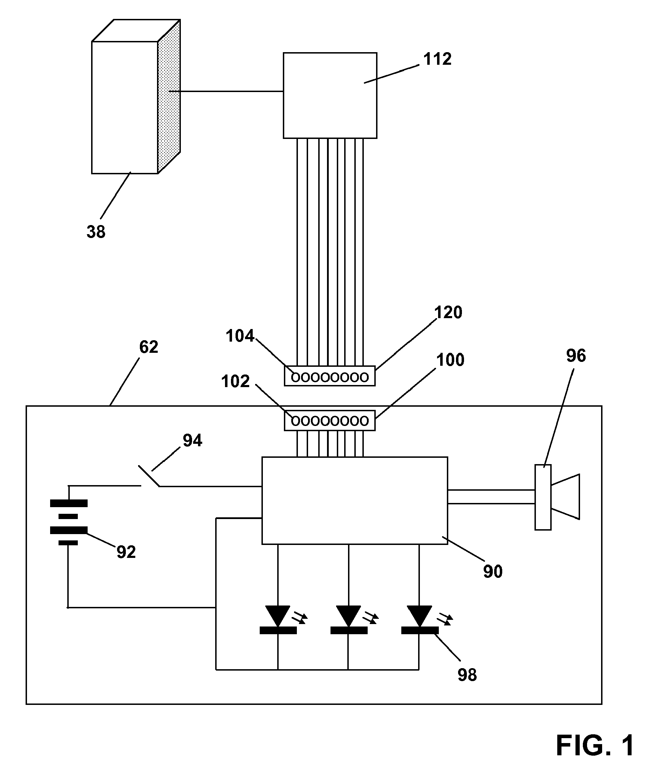

The autonomous sound reproduction unit refers to a self-contained device, suitable for attachment to the artifact that is configured to reproduce the personalized acoustic message upon activation. The autonomous sound reproduction unit comprises solid state memory for storage of the digitized acoustic message, a processing unit for conversion of the stored digitized acoustic message into an analogue signal, an amplification unit, an acoustic transducer (*e.g.* magnetic coil loudspeaker, piezo electric speaker), a power source (*e.g.* a button battery, a solar panel), and an activator. The autonomous sound reproduction unit is preferably configured for the reproduction only of sound, and not for recording of sound onto the solid state memory. The solid-state memory may not be rewritable *e.g.* it may be write-once memory, and read-only after being loaded with the acoustic message. The electronic components are co-operatively connected to function in accordance with the invention. One or more of the above components may be integrated into the same circuit board or integrated into the same integrated circuit. It is an aspect of the invention that the solid state memory is writable "in-circuit", meaning that after integration into the circuitry of the autonomous sound reproduction unit, the solid state memory may be written to. They may be housed in a single unit, or disposed in more than one unit connected by electrical cables, for example, the acoustic transducer may be separate from the other electrical components. The skilled person would readily be able to prepare the autonomous sound reproduction unit in accordance with the guidance provided herein using standard components and ordinary practices in the art. For general guidance only, circuit diagrams illustrated in FIG. 1 shows a possible scheme for connecting electrical components according to the invention. FIG. 1 depicts an exemplary autonomous sound reproduction unit 62, comprising an integrated circuit (IC) 90 connected to a power source 92, *via* an electrical switch 94, also operatively connected to an acoustic transducer 96 and optionally to three LEDs 98. The IC **90** has an integrated solid state memory for storage of a digitized acoustic message, processing unit for conversion of the stored digitized acoustic message into an analogue signal, and amplification unit for amplification of the analogue signal, cooperatively interconnected. The solid state memory may be programmed in-circuit *via* a connector array 100 disposed on a circuit board of the autonomous sound reproduction unit 62. The connector array 100 comprises a plurality of electrical contacts 102 each connected to a separate pin of IC 90. The connector array 100 is configured for disengagable electrical contact with a reciprocating connector array 120 of electrical contacts 104 connected to a one time programmable (OTP) memory writer 112 linked to a computer 38 configured to control the OTP writer 112. More details of the OTP memory writer 112 which is integrated into a writing station 42 are given further below.

### Acoustic transducer

The acoustic transducer is configured to receive analogue electrical signals, and reproduce them as sound energy, responsive to the electrical signals. The sound energy is preferably within the frequency range of ordinary human hearing. The acoustic transducer may be any, including piezo-electric transducers and magnetic coil transducers; preferably is a magnetic coil audio transducer.

### Activator

The activator is a device that activates message reproduction in response to an external stimulus. The stimulus may be any, for instance, a mechanical force, electromagnetic energy (*e.g.* light), acoustic energy, vibrational energy, moisture, orientation change, acceleration change. The activator may activate message reproduction when the stimulus is above a predetermined threshold or conforms to a predetermined pattern. The activator may comprise an electrical contact configured to complete an electrical circuit upon the application of a mechanical force, such as the opening of a greeting card or book, or depression of a button. Alternatively, the activator may comprise a photovoltaic cell, configured to activate the message when light above a certain intensity threshold falls on the cell. Alternatively, the activator may comprise a microphone, configured to activate the message when it detects sound above a certain threshold, or having a certain pattern (*e.g.* speech recognition). Alternatively, the activator may comprise an accelerometer, configured to activate the message when the card is shaken with a certain force.
In a preferred aspect of the invention, the artifact is disposed with a single electrical contact that triggers activation of the acoustic transducers.

### LED

Besides comprising the autonomous sound reproduction unit, the artifact may be disposed with one or more (*e.g.* 2, 3, 4, 5, 6, 7, 8, 9, 10, 11, 12, 13, 14, 15, 16, 17,18, 19, 20 or more) light-emitting transducers. The light emitting transducer may be, for example, a light emitting diode or an electroluminescent panel or sheet. It may be co-operatively connected to the autonomous sound reproduction unit, such that illumination is synchronized with audio emissions from the acoustic transducers.

### Disposed

The artifact is disposed with the aforementioned autonomous sound reproduction unit, meaning the sound reproduction unit in or on the artifact surface. The unit may be attached using any means including adhesive, adhesive tape, a staple, a shallow screw, or a rivet, or the like. The unit may be concealed by placement within the artifact *e.g.* behind an exterior surface. When the artifact is a paper-based communication medium, the unit is preferably sandwiched between two surfaces of the medium *e.g.* disposed between two sheets of card. Apertures may be present in the artifact to allow the passage of sound and/or light energy

### Acoustic message

The message may be orally spoken or sung, may be instrumental or percussive, or a mixture of these, generally taking any form that can be reproduced through the acoustic transducer. The acoustic message may be processed to optimize the volume, quality, and to adjust the bit rate, or to add other effects (*e.g.* echo, pitch change, variable playback speed). The processing may be user-adjustable. The acoustic message may be encoded in a suitable format (*e.g.* binary format) for writing to the solid state memory of the autonomous sound reproduction unit. The acoustic message may be provided by the subject, for instance, by speaking into a microphone, or by providing an electronic acoustic file (*e.g.* mp3, wav). Alternatively, it may be chosen by the subject from a pre-prepared selection *i.e.* that the manufacturer of the invention provides.

### Image

The image may be a photograph, a cartoon, an illustration, printed information, generally taking any form that can be reproduced on the artifact. The image is preferably converted into a digital form (*e.g.* jpeg, tif, pict) for ease of electronic transfer and processing. The image may be provided by the user, for instance, captured by a digital camera, or by providing an electronic image file (*e.g.* jpeg, pict, tif). Alternatively, it may be chosen by the subject from a pre-prepared selection *i.e.* that the manufacturer of the invention provides. The image may be disposed on the artifact using any method of the art, for instance, by conventional paper printing (*e.g.* ink-jet printing, laser printing, dye sublimation) when the artifact is a paper-based medium, or by spray printing or other deposition technique optionally combined with a robotic applicator, when the artifact is a object having an irregular or regular three-dimensional printing surface.

### Obtaining the acoustic message and image

The acoustic message and image that personalize the artifact may be obtained from the subject locally, for instance at the site of manufacture (*e.g.* in a kiosk) or remotely, for instance at the home of the subject.

### Remotely obtained acoustic message and image

According to one embodiment of the invention, the acoustic message and optionally the image are obtained remotely. They may be obtained using email, by using a telephone (acoustic message) over the Internet, *via* a web browser. In the case of using the Internet, the method may further comprise the step of making available an Internet page to the subject that can be read with an Internet browser, which web page is configured to receive the personalized acoustic message from the subject over the Internet in a digital format (*e.g.* wav, mp3, avi, real, or other). An Internet page may further be configured to receive the personalized image from the subject over the Internet in a digital format (*e.g.* jpeg, pict). As mentioned elsewhere, it is within the scope of the invention that the subject can choose from a range of pre-recorded messages and/or pre-prepared images, in which case an Internet page may further be configured to present a range of pre-recorded messages and optionally pre-prepared images from which the subject can choose. Additional information such as a postal address for delivery of the personalized artifact, billing address, credit or debit card details, may also be received from the subject over the Internet using a web page appropriate configured.

Another aspect of the invention is a computer-implemented method for obtaining an acoustic message from a subject remotely, the method comprising the steps of:
- making available a web page to the subject that can be read with an Internet browser running on a computer, which web page displays an interface requesting the acoustic message,
- receiving the personalized acoustic message provided the subject over the Internet, thereby obtaining the acoustic message from the subject remotely.

The web page may provide an interface that enables the subject to record the message using a microphone, for instance, connected to the computer displaying the web page. Alternatively or in addition, the web page may provide an interface that enables the subject to select the message from a sound file (*e.g.* mp3, avi) held on a storage medium that the computer can access. Alternatively or in addition, the web page may provide an interface that enables the subject to select from a choice of acoustic messages previously prepared. In addition, the web page may provide an interface allowing the subject to process the acoustic message, to provide an optimized sound. The processing may be any, and includes for instance, equalization, noise reduction, dynamic range compression, and optionally special effects such as echo, pitch change and variable speed. In addition, the sample rate of the sound may be adjusted for a particular autonomous sound reproduction unit, in such a way that the total space used in the solid state memory is optimized in a trade-off between sound-quality (determined by the sample-rate) and memory space usage. The interface may permit the subject to listen to the processed message, and perform additional processing adjustments as necessary. In addition, the web page may permit the subject to convert the optimized sound into a binary file that can be later loaded directly onto a solid state memory; the conversion may adjust the sample rate so that the size of the binary file is optimized for the size of solid state memory available in the autonomous sound reproduction unit.

The web page may further display an interface requesting a personalized image from the subject. In this regard, the web page may provide an interface that enables the subject to capture an image using a digital camera, for instance, connected to the computer displaying the web page. Alternatively or in addition, web page may provide an interface that enables the subject to select an image held on a storage medium that the computer can access. Alternatively or in addition, web page may provide an interface that enables the subject to select from a choice of images previously prepared. In addition, the web page may provide an interface allowing the subject to process the image. Processing may include, for instance, size adjustment, red-eye removal, adjustment of brightness, color saturation, contrast, and optionally special effects such as canvas, sketching, and cartooning effects. In addition, the interface may permit the subject to view to the processed image, and perform additional processing adjustments as necessary.

In addition, the web page may further display an interface requesting a postal and / or billing address, credit or debit card details.

Once the message, optional image and other information have been prepared by the subject, the web page may further display an interface allowing the data to be sent to the party implementing the method.

The interfaces mentioned above are typically graphical user interfaces, providing instructions and user input means (*e.g.* graphical dialogue boxes, buttons) as is well understood in the art. The interfaces may be implemented using one or more browser applications (*e.g.* Java or Flash application) that are downloaded by a web browser at the same time as the web page. The skilled person will appreciate that the interfaces may be present on a single web page, or in equal alternative, may be placed on two or more linked web pages.

The order information provided by the subject are received on a server connected to the Internet. Data concerning the image may be directed to a printing apparatus, where the artifact is printed with the image. Data concerning the acoustic message may be directed to a solid state memory writing device, where the autonomous sound reproduction unit is loaded with the digitized acoustic message, more specifically a binary file derived therefrom. A barcode printed on the artifact may be used to identify which digitized message is associated with the artifact or image printed thereon. The autonomous sound reproduction unit is attached to the artifact, preferably concealed there within, and an activator positioned so as to allow activation of the acoustic message by external stimulation. In the case when the artifact is a greeting card, the card may be folded as to conceal the unit, and to allow activation, *e.g.* upon the application of mechanical force by opening the card.

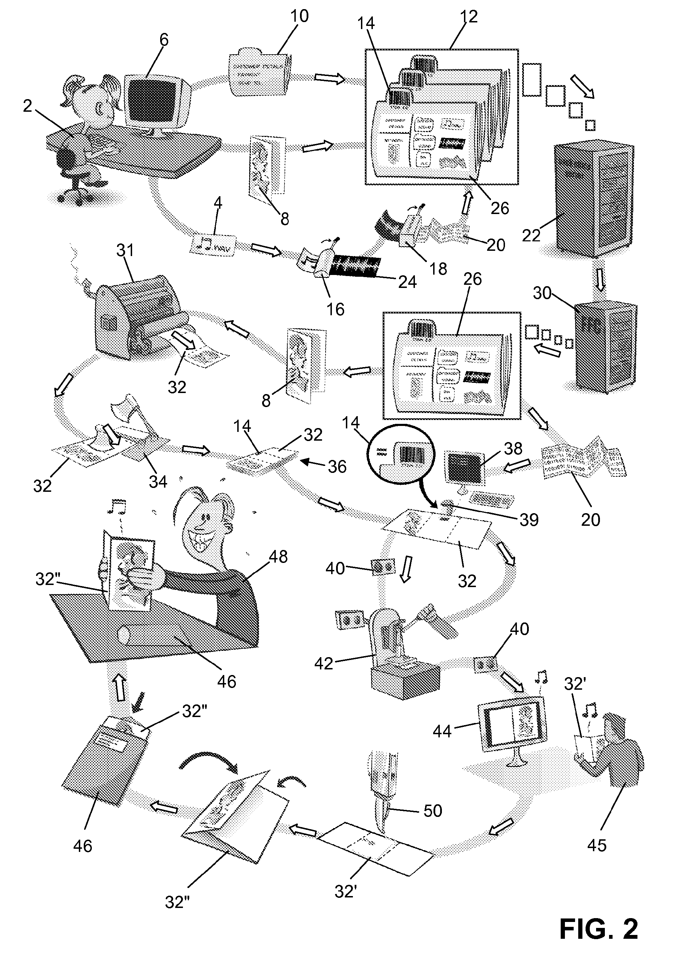

In a particularly preferred embodiment of the method of the invention, and with reference to **FIG. 2****,** the subject **2** provides an acoustic message **4** *via* a web page displayed within an Internet browser on a home computer **6.** The subject **2** also selects an image **8** for printing onto an artifact that is a paper-based communication medium of the greeting card variety. Furthermore, the subject **2** provides customer details **10** such as payment information and a delivery address. The web page may provide an interface allowing the subject **2** to process **16** the acoustic message **4,** to provide an optimized sound **24.** Processing **16** may include for instance, equalization, noise reduction, dynamic range compression, and optionally special effects such as echo, pitch change and variable speed. The browser application may permit the subject to listen to the processed message **4,** and perform additional processing adjustments as necessary. The same browser application or a further browser application may convert **18** the optimized sound **24** into a binary file **20** that can be loaded onto the solid state memory. The conversion may adjust the sample rate so that the size of the binary file is optimized for the size of solid state memory available in the autonomous sound reproduction unit. The customer details **10,** image **8,** and processed binary file **20,** is sent to a back office server **22** across the Internet.

While the above-mentioned processing **16** and conversion **18** are described as being performed by the subject **2,** it is within the scope of the invention that they are performed semi-automatically or automatically at the office-side *e.g.* by the back office server **22.** In other words, the subject **2** provides an acoustic message **4** *via* a web page displayed within an Internet browser on a home computer **6,** which message is transferred across the Internet where it is processed **16** and converted **18** into a binary file **20** for storing onto the solid state memory. The processing **16** and conversion may be automatic or semiautomatic **18.**

The order information **26** comprising at least the binary file **20,** and optionally customer details **10,** the image information **8,** artifact information, acoustic message **4, ,** and optimized sound **24** are held on a database **12** stored on the back office server **22.** The elements of the order information **26** *e.g.* the acoustic message **4,** customer details **10,** image information **8,** artifact information, optimized sound **24** and acoustic binary file **20** elements are identified as being linked to each other, for instance, by virtue of a unique ID number which may later be encoded as a barcode **14** or in another tagging system for disposing onto the artifact. The database **12** may be any, including a relational database.

The back office server **22** is connected to a fulfillment centre (FFC) server **30,** from which the customer order **26** is retrieved. The back office server **22** and FFC server **30** may be remotely connected. The image information **8** is retrieved from the FFC server **30** and sent to a printing station **31** comprising an apparatus suitable for the production of greetings cards. The card **32** disposed with the image **8** and also a barcode **14** is produced, which card **32** is cut and scored by at a cutting/scoring station **34** comprising suitable apparatus as necessary. A stack **36** of cards each provided with a different image, associated with a different acoustic message may be produced. The barcode **14** determines which autonomous sound-reproduction unit (and acoustic message) is attached to the card **32** from the stack **36.** A barcode reader **39** attached to a computer **38** linked to the FFC server scans the barcode **14,** and the associated acoustic binary file **20** is loaded from the FFC server **30** onto the solid state memory **40** contained in the autonomous sound reproduction unit using a writing station **42** comprising a suitable solid state memory writing device, such as an OTP writer. The card **32',** disposed with the loaded autonomous sound reproduction unit is checked in at a quality control station by an officer **45** who compares the emitted sound with that held in the database of the FFC server 30, and who also checks that the correct image has been linked with the emitted sound using a computer **44** in communication with the FFC server.

The flaps of the quality-checked card **32'** are bound using an adhesive from an adhesive-dispensing machine **50,** and the flaps are folded to produce a folded card **32**". Adhesive application and folding may be performed at a folding / gluing station. The folded card **32"** is placed in an envelope **46** printed with the address indicated in the order information **26** held on the FFC server **30;** this may be performed at an enveloping station. The card **32"** is sent to the recipient **48.**

One embodiment of the invention is a method for providing an autonomous sound reproduction unit optionally incorporated into an artifact using a fulfillment centre (FFC) as described above. The fulfillment centre may receive order information from a remote location, for example, from a back office server described above or from a third party manufacturer requesting a batch of personalized autonomous sound reproduction units (*e.g.* a greeting card manufacturer), or requesting a batch of personalized greeting cards. Where the third party manufacturer is a greeting card manufacturer requiring a plurality of personalized autonomous sound reproduction units to place in its cards, the manufacturer may supply a plurality of sound files that the fulfillment centre receives. Where the third party manufacturer requires a plurality of personalized greetings artifacts, the manufacturer may supply a plurality of sound files and / or image files and/ or artifacts selections that the fulfillment centre receives.

A further embodiment of the invention is a fulfillment centre, comprising a fulfillment centre server for receiving order information, an optional printing station for printing an image onto an artifact, and a writing station for writing the digitized acoustic message to the solid state memory of the autonomous sound reproduction unit. It may optionally comprise a quality control station for checking that the emitted sound is correct, and optionally that the correct image has been linked with the emitted sound. The fulfillment centre may be automated by mechanization, for instance, by the use automatic feeders for the autonomous sound reproduction units and optionally artifacts, robotics and/conveyors belts to move the autonomous sound reproduction units and optionally artifacts between various stations. The configuration of an automatic and mechanized FFC is within the practices of the skilled person based on the guidance herein.

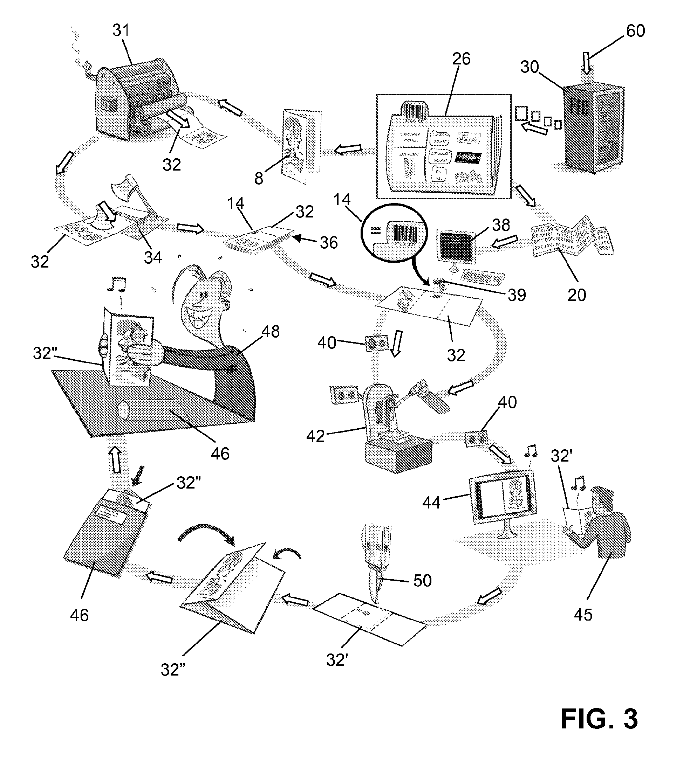

**FIG. 3** depicts a fulfillment centre and a method for providing one or more personalized artifacts using the fulfillment center. The fulfillment center (FFC) server **30,** holds the order information **26** that is received remotely **60** from a customer over the Internet as mentioned above, or from a third party supplier requesting a batch of personalized artifacts (greetings cards in this instance), or from any requesting party. Image data **8** is retrieved from the FFC server **30** and sent to a printing station **31** comprising an apparatus suitable for the production of greetings cards. The card **32** disposed with the image **8** and also a barcode **14** is produced, which card **32** is cut and scored by at a cutting/scoring station **34** comprising suitable apparatus as necessary. A stack **36** of cards each provided with a different image, associated with a different acoustic message may be produced. The barcode **14** determines which autonomous sound-reproduction unit (and acoustic message) is attached to the card **32** from the stack **36.** A barcode reader **39** attached to a computer **38** in communication with the FFC server **30** scans the barcode **14,** and the associated acoustic binary file **20** is loaded from the FFC server **30** onto the solid state memory **40** contained in the autonomous sound reproduction unit using a writing station **42** comprising a suitable solid state memory writing device. The card **32',** disposed with the loaded autonomous sound reproduction unit is checked at a quality control station by an officer **45** who compares the emitted sound with that held in the database of the FFC server **30,** and who also checks that the correct image has been linked with the emitted sound using a computer **44** in communication with the FFC server **30.** The flaps of the quality-checked card **32'** are bound using an adhesive from an adhesive-dispensing machine **50,** and the flaps are folded to produce a folded card **32".** Adhesive application and folding may be performed at a folding / gluing station. The folded card **32"** is placed in an envelope **46** printed with the address indicated in the order information **26;** this may be performed at an enveloping station. The card **32"** is sent to the recipient **48.** The fulfillment centre may be automated by mechanization, for instance, by the use automatic feeders for artifacts, robotics and/conveyors belts to move the artifact between stations. Mechanization permits the possibility of high throughput order processing.

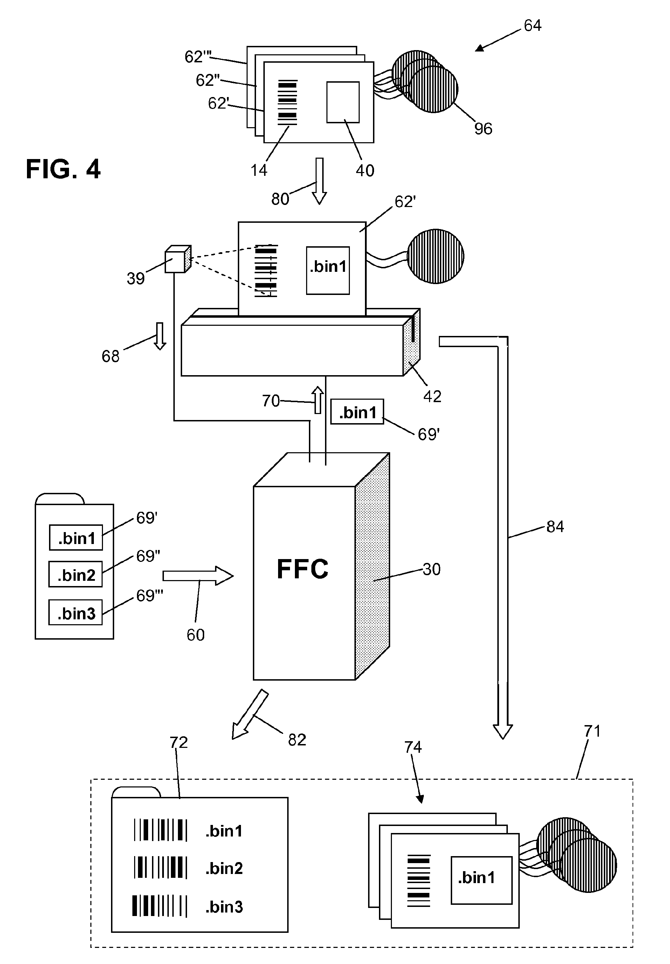

**FIG. 4** depicts a fulfillment centre and a method for providing one or more personalized autonomous sound reproduction unit using the fulfillment center. The fulfillment centre (FFC) server **30,** holds order information **26** as mentioned elsewhere. The FFC server **30** receives **60** order information **68** remotely from a customer requesting a supply of personalized autonomous sound reproduction units; the customer may be a greeting card manufacturer wishing to integrate the units in his cards. Where the third party manufacturer is the greeting card manufacturer, it may supply a plurality of acoustic binary files **(69', 69", 69''')** that the fulfillment centre receives. An autonomous sound reproduction unit **62',** comprising a blank solid state memory **40,** a loudspeaker **96,** and a unique tag such as a barcode **14** or RF ID tag is taken **80** from a stock **64** of such units. An acoustic binary file **69'** is retrieved from the FFC server **30** and sent **70** to a writing station **42** comprising a suitable solid state memory writing device. A barcode reader **39** in communication with the FFC server **30,** scans the barcode **14** disposed on the autonomous sound reproduction unit **62'** and sends **68** the information to the FFC server **30** where it is associated with the acoustic binary file **69'.** The autonomous sound reproduction unit **62'** is loaded with the acoustic binary file **69'** using the writing station **42.** The loaded autonomous sound reproduction unit **62'** may be checked at a quality control station by an officer who compares the emitted sound with that held in the database (not shown). The writing process is repeated for the remaining acoustic binary files **69", 69"',** each written to the blank solid state memory of a different autonomous sound reproduction unit **62", 62'''** identified by a barcode. A batch **74** of loaded autonomous sound reproduction units each identified by a unique tag is formed **84** that is packaged **71** and sent to the customer, together with data **72** retrieved **82** from the FFC server **30** identifying which barcode is associated with which acoustic binary file. The fulfillment centre may be automated by mechanization, for instance, by the use automatic feeders for artifacts, robotics and/conveyors belts to move the artifact between stations. Mechanization permits the possibility of high throughput order processing.

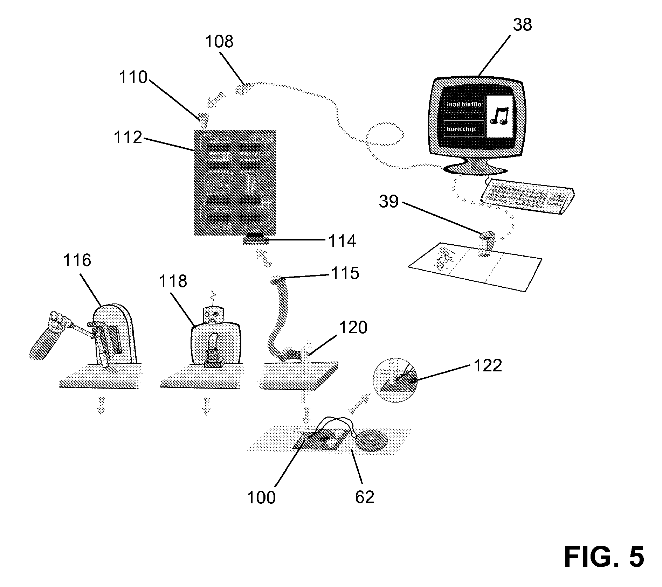

As mentioned earlier, and as depicted in **FIGs.1** to **4****,** acoustic binary file **20** may be written to the solid state memory using a writing station **42** while said memory is assembled in the autonomous sound reproduction unit **62,** which process is known as in-circuit programming. According to one embodiment of the invention and with reference to **FIG. 5****,** the writing station **42** comprises a one time programmable (OTP) writer **112** connected *via* a pair of reciprocating connectors **108, 110** to the computer **38.** A barcode reader **39** is attached to the computer **38** which in turn is linked to the FFC server. The configuration of computer **38,** barcode reader **39** and writing station **42** is described, for instance, in **FIGs. 2** and **3****.** The OTP writer **112** is connected to a first connector array **120** *via* a pair of reciprocating connectors **114, 115,** which first connector array **120** comprises an array of electrically conducting contacts, spatially separated and configured for disengagable electrical contact with a second connector array of electrical contacts on the autonomous sound reproduction unit **62.** The contacts may be elongated. When engaged **122** (detail), each electrical contact of the first connector array **120** is configured to make separate electrical contact with each electrical contact of the second connector array **100** - thereby the solid state memory can be in-circuit programmed. Engagement of first connector array **120** maybe manual **116** for instance, using a hand operated lever to lower and raise the first connector array **120** with respect to the autonomous sound reproduction unit **62.** Alternatively, engagement of first connector array **120** maybe automatic **118** for instance, using a hydraulic piston or motorized arm to lower and raise the first connector array **120** with respect to the autonomous sound reproduction unit **62.**

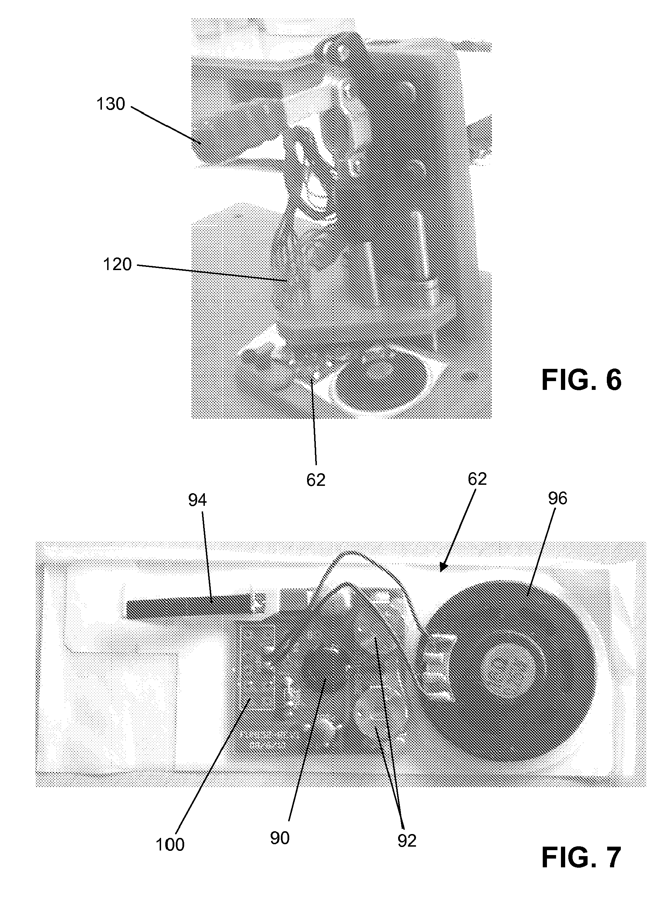

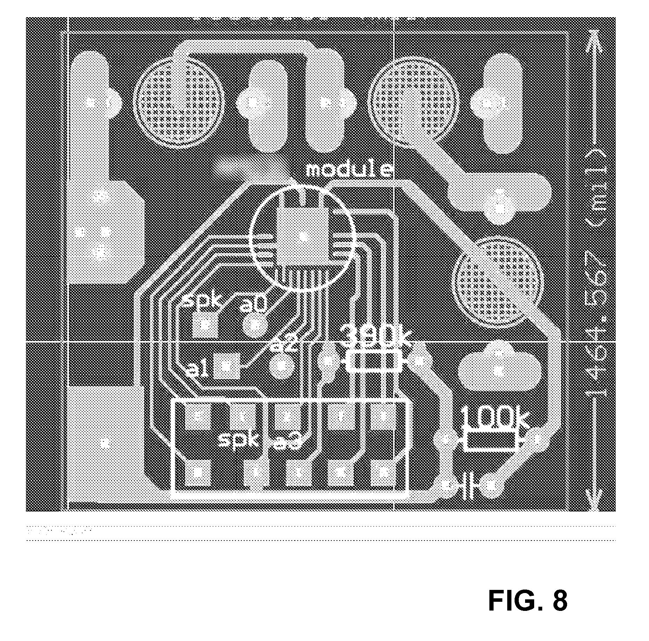

**FIG. 6** shows an instance of a writing station disposed with a manual, hand operated lever **130** to lower and raise the first connector array **120** with respect to the autonomous sound reproduction unit **62.** **FIG.** 7 shows an autonomous sound reproduction unit **62** disposed with a first connector array **100** etched onto a circuit board **132,** onto which, among other components, a power source **92,** switch **94,** IC **90,** and acoustic transducer **96** are wired. **FIG. 8** shows a printed circuit board of an autonomous sound reproduction unit of the invention.

### Locally obtained acoustic message and image

According to another embodiment of the invention, the acoustic message and optionally the image are obtained locally *i.e.* at the site of production. In a preferred embodiment of the invention, the acoustic message and optional image are obtained using a kiosk. The kiosk is disposed with a means to obtain the acoustic message and optional image. For instance, the means may be a microphone to record said message. The captured message is converted into a digital format (*e.g.* wav, mp3, avi, real or other) for transfer, after processing, to the artifact. Alternatively or in addition, the means may be a digital camera in order to record an image in a digital format (*e.g.* jpeg, pict) captured inside the kiosk. It is within the scope of the invention that the subject can choose from a range of pre-recorded messages or pre-prepared images, in which case the means is a selection means (*e.g.* an interactive user interface).

According to one aspect of the invention, the acoustic message and optional image may be held on a digital storage device which a subject brings to the kiosk, and that the kiosk can read. According to this embodiment of the invention, the means to obtain the acoustic message and optional image, is a reader for a digital storage device. Examples of digital storage devices include:
- solid state memory devices (*e.g.* for a USB stick, SD card, flash card, memory stick etc.)
- optical storage media (*e.g.* CD ROM, DVD-ROM, Blu-Ray-ROM)
- Digital music player (*e.g.* iPod, other mp3 player)
- Cellular (mobile) telephone equipped with Bluetooth, infrared, or other data-transfer means.

In one form, the kiosk is a small cabin disposed with an entrance in which the subject enters. The kiosk may be of similar shape and dimensions to a passport photograph kiosk. For privacy, the entrance may be at least partially closable with a curtain or door. An adjustable stool is preferably provided for the subject to sit on. A user interface is provided (*e.g.* touch screen) to guide the subject through the available options. The kiosk of the cabin type is disposed with a microphone and optionally a digital camera, and the user may follow the instructions in order to obtain the acoustic message and image. Once the acoustic message and optional image have been obtained, the subject may make a payment (*e.g.* using coins, debit / credit card, cellular (mobile) telephone, smart payment card etc.). It is within the scope of the invention that the kiosk comprises a reader for one or more of the aforementioned digital storage devices (*e.g.* solid-state memory card slots, infra-red interface, Bluetooth capabilities).

In another form, the kiosk is of a stand variety, comprising a reader for one or more of the aforementioned digital storage devices (*e.g.* solid-state memory card slots, infra-red interface, Bluetooth capabilities), and a user interface (*e.g.* touch screen) to guide the subject through the available options. The user may follow the instructions, for instance on a touch-screen, in order to select the acoustic message and image from the digital storage devices, or choose one from a prepared selection. Once the acoustic message and optional image have been chosen, the subject may make a payment (*e.g.* using coins, debit / credit card, cellular (mobile) telephone, smart payment card etc.).

Contained within a housing of any kiosk of the invention are the necessary components to produce the artifact according to the invention, and dispense it from the kiosk while the subject waits. Data concerning the optional image may be directed to a printing apparatus, where the artifact is printed with the image. Data concerning the acoustic message may be directed to a solid state memory writing device, where the autonomous sound reproduction unit is loaded with the digitized acoustic message. A barcode printed on the artifact may be used to identify which digitized message is associated with the image. The autonomous sound reproduction unit is attached to the associated artifact and the activator suitably placed. Where the artifact is a greeting card, for example, the card may be folded so as to conceal the unit, and to allow activation upon the application of mechanical force (*e.g.* opening the card).

The kiosk is preferably suitable for location in a public place, and accordingly have particular qualities, such as durability, stability, being vandal-proof, and while complying with local laws concerning, for example, health and safety requirements. It is envisaged that the kiosk may be placed in railway stations, airports, greeting card shops, pharmacies, night stores, supermarkets, ferry terminals, photography studios, camera shops, etc.

The artifact as described herein is able to be personalized with a message that suits the sentiments of the sender, appropriate not only for humorous occasions, but can be relevant to other situations, such as health, friendship, luck, success, commiserations etc. The number of combination of messages and images far out weights those that could be displayed at a conventional gift store, thereby, providing increased choice, while reducing the possibility of unsold stock.

Moreover, the invention allows the greeting card manufacture to produce an unlimited range of artifacts each having a different acoustic message, which does not require a stock of autonomous sound reproduction units pre-written with messages. The manufacture need only stock "blank" and unwritten autonomous sound reproduction units, that can be individually customized. Where the acoustic message is selected from, for example, a current hit-chart song, the stock will never age as the song goes out of fashion, unlike manufactures who prepare a quantity of sound reproduction units in bulk that must be sold while the song is still popular.

## Claims

1. Method for preparing an artifact personalized by a subject, comprising the steps of:
- obtaining a personalized acoustic message from the subject,
- transferring the acoustic message to an autonomous sound reproduction unit configured to store the message and reproduce the message upon activation, and
- providing said artifact disposed with the autonomous sound reproduction unit,
thereby obtaining an artifact personalized by the subject.

2. Method according to claim 1, further comprising the step of obtaining a personalized image from the subject, and wherein the personalized artifact is further disposed with said image.

3. Method according to claim 1 or 2, wherein the artifact is a greeting card.

4. Method according to any of claims 1 to 3, wherein the sound reproduction unit comprises:
- solid-state memory for storage of the acoustic message, preferably a one-time programmable solid state memory,
- an acoustic transducer,
- a power source,
- an activator, and
- a processing unit for conversion of the stored acoustic message into electrical signals for the acoustic transducer.

5. Method according to any of claims 1 to 4, wherein the acoustic message is processed and converted to a binary file before being transferred to the sound reproduction unit.

6. Method according to claim 5, wherein the processing and conversion are performed semi-automatically or automatically.

7. Method according to any of claims 1 to 6, wherein the acoustic message and/or image is obtained remotely, preferably by email, by telephone or by using a web page.

8. Method according to claim 7, wherein the web page is further configured to receive a delivery address and/or payment from the subject.

9. Method according to any of claims 1 to 8, wherein the acoustic message is provided by the subject, or selected by the subject from a choice of acoustic messages previously prepared.

10. Method according to any of claims 1 to 9, wherein the acoustic message is obtained in a kiosk disposed with a means to obtain the acoustic message, and the personalized artifact is dispensed from the kiosk.

11. Method according to claim 10, including the limitation of claim 2, wherein the kiosk is further disposed with a means to obtain said image.

12. An artifact disposed with an autonomous sound reproduction unit configured to reproduce a personalized acoustic message upon activation.

13. An artifact obtainable by a method according to any of claims 1 to 11.

14. A fulfillment centre for making one or more personalised artifacts obtainable by a method according to any of claims 1 to 11 according to a customer order, comprising:
- a fulfillment centre server for receiving the customer order, operatively linked to a
- a solid state memory writing device for writing to a solid state memory disposed in the autonomous sound reproduction unit, and a
- a tag reader, for reading a unique identifying tag disposed on artifact, the centre configured to
- write an acoustic binary file corresponding to the personalized acoustic message to the solid state memory, and
- identify the acoustic message of the artifact using the tag reader.

15. Fulfillment centre according to claim 14, configured to produce the one or more sound-personalized artifacts, and data indicating the unique identifying tag that corresponds to the acoustic message of each personalized artifact.
